# EUROPÄISCHE PATENTSCHRIFT

(11) **EP 2 236 238 B1**
(45) Veröffentlichungstag und Bekanntmachung des Hinweises auf die Patenterteilung: **17.09.2014**
(21) Anmeldenummer: 09005830.6
(22) Anmeldetag: 27.04.2009
(51) Int. Cl.: B23K 26/08, B23K 26/26, B21C 37/18, E02D 5/48, E04H 12/10, E04H 12/08, E04H 12/22

(54) **Konischer Mast mit einer durch Laser geschweissten Längsnaht**
Conical mast with a longitudinal laser welded seam
Mât conique avec un cordon longitudinal de soudure par laser

(30) Priorität: 03.04.2009 WO PCT/CH2009/000113
(43) Veröffentlichungstag der Anmeldung: 06.10.2010
(73) Patentinhaber: Europoles Sp. z.o.o., 00514 Warszawa (PL)
(72) Erfinder: Lück, Franz, 92318 Neumarkt (DE); Lieb, Helmut, 92318 Neumarkt (DE); Wimmer, Karl, 92369 Sengenthal (DE)
(74) Vertreter: Blaumeier, Jörg

(56) Entgegenhaltungen:
- EP-A- 1 862 234
- US-A- 3 034 209
- US-A- 3 648 008
- US-A- 4 648 220
- US-A- 4 920 715
- US-B1- 6 495 792

## Beschreibung

Die Erfindung betrifft einen konischen Mast gemäß dem Oberbegriff des Anspruchs 1 (siehe, z.B., EP 1 862 234).

Konische Masten aus Metall, insbesondere aus Stahl, werden als Beleuchtungsmasten, Antennenmasten, Leitungsmasten eingesetzt. Es ist bekannt, solche Masten aus konisch gerundeten Rohlingen herzustellen, deren Längsnaht durch Unterpulverschweißen geschlossen wird. Das Schweißen der Längsnaht erfolgt unter manueller Überwachung in einer speziellen Schweißanlage. Die Anfangs- und Endbereiche der Schweißnaht müssen allerdings nachträglich manuell bearbeitet werden.

Daneben betrifft die Erfindung einen konischen Mast aus Metall mit einer geschweißten Längsnaht.

Der erfindungsgemäße konische Mast ist im Anspruch 1 definiert.

Besonders bevorzugt wird es dabei, dass die Längsnaht über die gesamte Dicke durchgeschweißt ist. Anders als bei herkömmlichen geschweißten konischen Masten, die typischerweise nur zu 60 bis 80 % der Wandstärke durchgeschweißt sind, kann bei dem erfindungsgemäßen konischen Mast die gesamte Wandstärke die auftretenden Lasten aufnehmen, sodass Mastrohlinge mit geringerer Wandstärke verwendet werden können.

Erfindungsgemäß weist der Mast mit einer Länge bis zu 8 m eine Wandstärke von 1,5 mm und bei einer Länge zwischen 8 und 12 m eine Wandstärke von 2 mm auf.

Eine weitere Verbesserung kann bei dem erfindungsgemäßen Mast dadurch erzielt werden, dass er aus einem rostfreien oder korrosionsbeständigen Stahl hergestellt ist. In diesem Fall kann eine nachträgliche Oberflächenbehandlung, beispielsweise durch Verzinken, entfallen, wodurch eine bessere Umweltverträglichkeit erzielt wird.

Alternativ kann der erfindungsgemäße konische Mast aus Stahl hergestellt und mit einer Korrosionsschutzschicht, insbesondere einer Zinkschicht, versehen sein.

Es liegt auch im Rahmen der Erfindung, dass am Mastfuß ein konisches Verstärkungsrohr angebracht ist. Das konische Verstärkungsrohr kann am Fußende aufgepresst sein. In diesem Bereich kann der Mast auch eine verschließbare Öffnung aufweisen.

Bei anderen Ausgestaltungen der Erfindung kann am Mastfuß eine vorzugsweise gewölbte Flanschplatte angebracht sein. Die Flanschplatte liegt nach der Montage des Mastes auf dem Erdboden auf.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellungen und zeigen:
- Fig. 1: eine schematische Ansicht des Verfahrens zur Herstellung eines konischen Masts;
- Fig. 2: obere und untere Beaufschlagungsmittel in der Stellung zur Beaufschlagung des Mastendes mit geringem Durchmesser;
- Fig. 3: die Beaufschlagungsmittel von Fig. 2 in einer Zwischenposition;
- Fig. 4: die Beaufschlagungsmittel der Fig. 2 und 3 in der Position am Ende des Masts mit dem großen Durchmesser;
- Fig. 5: den Mast von Fig. 1 von der Einlaufseite her gesehen;
- Fig. 6: den Mast von Fig. 1 in Richtung der Schweißzone gesehen;
- Fig. 7: eine Ansicht des Masts von Fig. 1 von der Auslaufseite her gesehen;
- Fig. 8: eine geschnittene Seitenansicht eines erfindungsgemäßen Masts; und
- Fig. 9: einen Querschnitt durch den in Fig. 8 gezeigten Mast im Bereich der Schweißnaht.

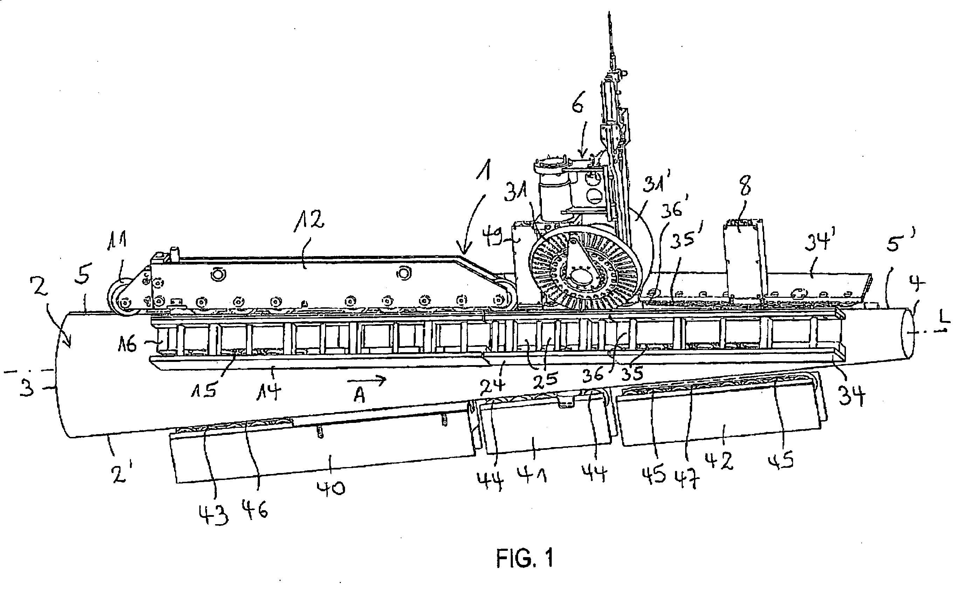

Figur 1 zeigt in schematischer Darstellung eine Ausführungsform einer Vorrichtung 1 zur Durchführung des Verfahrens. In der Vorrichtung ist ein konischer Mastrohling 2 (mit übertrieben groß dargestellter Konizität) gezeigt, der ein hinteres Ende 3 mit großem Durchmesser und ein vorderes Ende 4 (Zopf) mit kleinem Durchmesser aufweist. Der Rohling 2 ist dabei auf eine der Fachperson bekannte Weise gerundet worden, z. B. mittels Rundungswerkzeugen in mehreren Schritten in einer Presse. Dies wird, da bekannt, hier nicht weiter erläutert. Der Rohling kann direkt nach der Rundung in die Vorrichtung 1 gelangen oder kann aus einem Zwischenlager entnommen werden.

Der Rohling 2 wird dann im Durchlauf durch die Vorrichtung 1 mittels einer Laserschweißeinrichtung 6 geschweißt. Laserschweißeinrichtungen dieser Art sind grundsätzlich bekannt und diese wird hier nicht weiter erläutert. Der Laserstrahl trifft dabei auf den Spalt des mit der Schweißgeschwindigkeit durchlaufenden Rohlings und verschweißt diesen. Der anfänglich noch relativ weit offen stehende Spalt 5 des Rohlings wird dabei durch ein Beaufschlagen des Rohlings vor der Laserschweißeinrichtung 6 auf noch zu erläuternde Weise weitgehend geschlossen, damit eine fehlerfreie Laserschweißung möglich ist. Dazu ist in der Regel eine maximale Spaltbreite in der Schweißzone von 0,3 Millimetern einzuhalten. Durch die Beaufschlagung kann der Spalt trotz Steigungs-, Abwicklungs-, Längen- oder Materialdickenfehler des Rohlings entsprechend klein gemacht werden. Nach der Schweißeinrichtung 6 liegt eine geschlossene Schweißnaht 5' vor. Der Mastrohling durchläuft die Vorrichtung 1 in Richtung des Pfeils A bzw. er wird auf der in der Figur 1 linken Seite als Rohling in die Vorrichtung eingeführt und tritt auf der in der Figur rechten Seite aus der Vorrichtung 1 als geschweißter Mast aus, sodass er dort entnommen und zur weiteren Bearbeitung geführt werden kann. Das bei der Schweißung von meterlangen konischen Masten aus Metall neuartige Vorgehen der Schweißung im Durchlauf mittels Laser bringt die eingangs genannten Vorteile.

Bei dem gezeigten Beispiel durchläuft der Rohling 2 die Vorrichtung 1, sodass der Spalt 5 bzw. die Schweißnaht 5' während des Durchlaufs horizontal zu liegen kommt. Entsprechend liegt die Mittellängsachse L des Masts beim Durchlauf durch die Vorrichtung 1 nicht horizontal (sondern in der Figur 1 von links nach rechts schräg nach oben) und die Auflage bzw. das Beaufschlagungsmittel für den dem Spalt gegenüberliegenden Mantelflächenteil 2' des Masts verläuft ebenfalls schräg nach oben und wird beim Durchlauf des Mastrohling diesem angepasst bewegt, damit der Rohling formangepasst unterstützt ist. Vorzugsweise wird dabei durch die Auflage bzw. die Beaufschlagung gesteuert oder geregelt eine einstellbare Kraft auf den Rohling ausgeübt, insbesondere zentral in dem dem Spalt gegenüberliegenden Bereich 2', welche Kraft zur Schließung des Spalts 5 beiträgt. Die Auflage bzw. das Beaufschlagungsmittel für den Rohling wird in der Vorrichtung 1 durch mehrere Elemente gebildet. In dem gezeigten Beispiel durch die Elemente 40, 41 und 42, welche eine Vielzahl von Rollen 43 bzw. 44 bzw. 45 aufweisen. Die Rollen 43 des Elements 40 können mit einem auf diesem laufenden gemeinsamen Förderband 46 verbunden sein. Ebenso kann ein Förderband 47 auf den Rollen 45 laufen. Bei den Rollen 44 des Elements 41, das unterhalb des eigentlichen Schweißbereichs liegt, ist vorzugsweise kein Band vorgesehen, da diese Rollen 44 bevorzugt mit höherer Kraft auf die Unterseite 2' des Rohlings einwirken, um den Spalt zu schließen, was noch gezeigt wird.

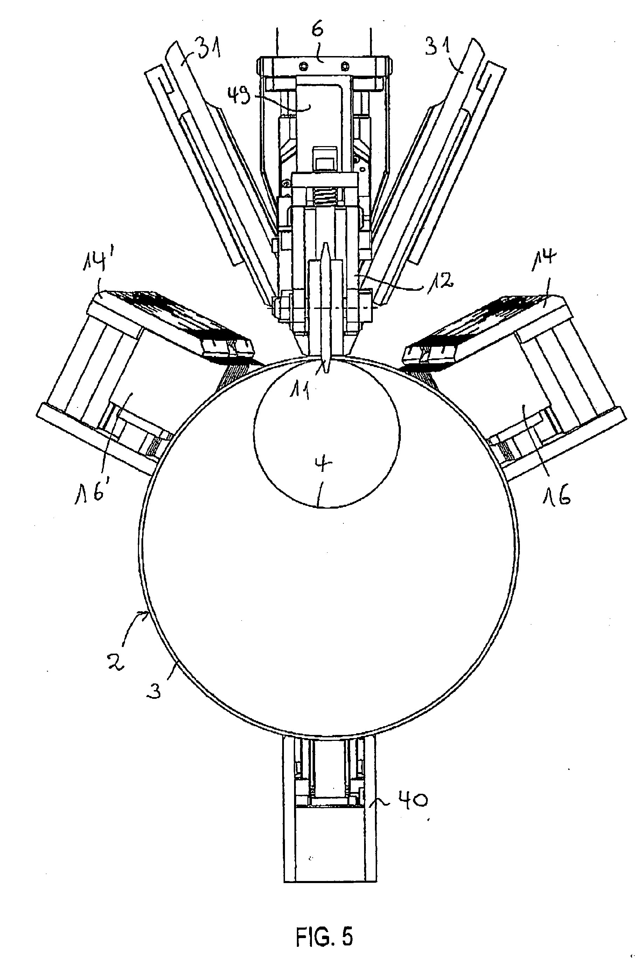

Seitlich des Spalts 5 wird der Rohling beidseits mit Führungen bzw. Beaufschlagungsmitteln beaufschlagt, welche (bei der gezeigten Durchlaufweise des Rohlings) aus einer Anfangsstellung mit nahe beieinander liegenden Führungen bzw. Beaufschlagungsmitteln voneinander weg verstellbar sind, um eine fortlaufend der Konizität angepasste größer werdende Führung bzw. Beaufschlagung bzw. Begrenzung für den Rohling bei seinem Durchlauf zu bilden. In dem gezeigten Beispiel sind diese Beaufschlagungsmittel auf jeder Seite des Spalts als drei in Durchlaufrichtung aufeinander folgende Elemente 14, 24 und 34 angeordnet. Jedes der Elemente weist Rollen 15 bzw. 25 bzw. 35 auf und es können bei den Elementen 14 und 34 Bänder 16 bzw. 36 vorgesehen sein, die auf den Rollen laufen. Da Elemente, Rollen und Bänder beidseits des Spalts vorgesehen sind, sind auch Elemente 14', 24' und 34' mit Rollen 15', 25' und 35' sowie allenfalls Bändern 16' und 36' vorgesehen, die in der Figur 1 weitgehend verdeckt sind, aber in den Figuren 5 bis 7 ersichtlich sind.

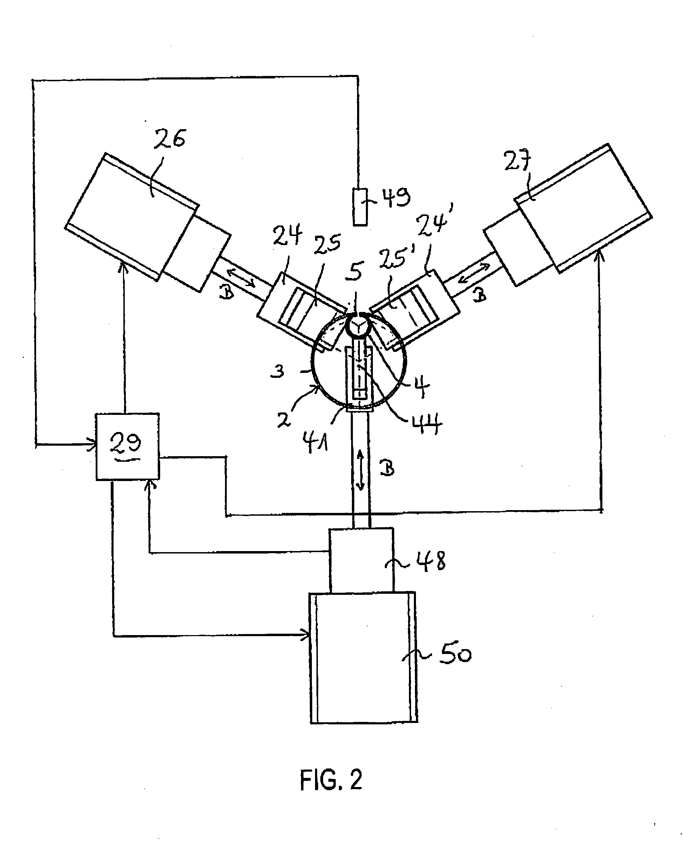

In der Figur 1 sind die Antriebe zur Beaufschlagung des Mastrohlings mit den Elementen 14, 14', 24, 24' und 34, 34' sowie 40, 41 und 42, bzw. zu deren Verstellung zur Anpassung an die konische Form des Rohlings, nicht dargestellt. Dies erfolgt schematisch an Hand der Figuren 2 bis 4. Weiter nicht gezeigt sind die Antriebe, mittels welchen der Mastrohling durch die Vorrichtung 1 hindurch gefördert wird. Dies erfolgt vorzugsweise durch den drehenden Antrieb eines Teils oder aller der erwähnten Rollen 15. 15', 25, 25', 35, 35' sowie 43, 44 und 45. Entsprechende Antriebsmittel sind dem Fachmann bekannt, insbesondere elektromotorische, pneumatische oder hydraulische Antriebsmittel und müssen hier nicht weiter erläutert werden. Anstelle des Hindurchziehens des Rohlings bzw. Masts durch die Vorrichtung mittels der Rollen kann ein anderes nicht dargestelltes Mittel vorgesehen sein, durch welches der Mastrohling durch die Vorrichtung hindurch gefördert wird, ebenfalls bevorzugt durch Zug, allenfalls aber auch durch ein Hindurchstoßen.

An Hand der Figuren 2, 3 und 4 wird erläutert, wie der Mastrohling bevorzugt durch Beaufschlagungsmittel geführt und auch zur Formung bzw. Spaltschließung beaufschlagt wird. Dadurch wird einerseits eine sich an die konische Form des Rohlings während des Durchlaufs durch die Vorrichtung anpassende Führung gebildet. Dies erlaubt die Führung mit der für das Laserschweißen nötigen Präzision, da bei dieser Schweißung präzise im Laserfokus gearbeitet werden muss. Andererseits erlauben die Beaufschlagungsmittel durch gezielte Beaufschlagung des Rohlings das Schließen des Spalts 5 auf die für das Laserschweißen notwendige geringe Spaltbreite. Dies erlaubt auch eine aktive Beeinflussung der Spalt- bzw. Nahtgeometrie. Bei einer Ankopplung an eine Regelung kann somit die Nahtgeometrie dynamisch geregelt werden.

Die Figuren 2, 3 und 4 zeigen die Beaufschlagung mittels der Elemente 20, 20' und 41 im eigentlichen Schweißbereich. Für die Elemente 14, 14' und 40 im Einlaufbereich gelten aber grundsätzlich dieselben Überlegungen und die Beaufschlagung erfolgt grundsätzlich auf dieselbe Weise. Abweichungen ergeben sich in für die Fachperson ersichtliche Weise durch die die Rollen 15 bzw. 43 verbindenden Bänder 16 bzw. 43', wenn solche vorgesehen sind. Es können einzelne Rollen einzeln angetrieben oder Gruppen von Rollen jedes Elements 14, 14' oder 40 zusammen angetrieben auseinander gefahren werden, wie dies nachfolgend für die Rollen 21, 21' im Schweißbereich erläutert wird. Oder es können alle Rollen eines Elements angetrieben vom Mastrohling weg gefahren werden, wobei dies insbesondere erfolgen kann, indem das ganze Element als Einheit bewegt wird. Für die Elemente 30, 30' und 42 im Auslauf nach dem Schweißbereich ist die Funktion der Spaltschließung nicht mehr relevant bzw. hier wird nur noch die fertig geschweißte Naht stabil gehalten. Diese Elemente bilden aber ebenfalls die verstellbare Führung für den Durchlauf des konischen Masts.

Figur 2 zeigt den Mastrohling 2, der mit dem vorderen Ende 4 gerade den Schweißbereich erreicht hat. Der Laserstrahl, der von oben auf den Spalt 5 einwirkt bzw. die Laserschweißeinrichtung 6 ist dabei nicht gezeigt. Ersichtlich ist, dass der Spalt 5 in der Horizontalebene der Vorrichtung 1 liegt (die in der Figur 2 eine senkrecht zum Zeichnungsblatt stehende Ebene ist), welche dabei zugleich die Schweißebene ist. Entsprechend ist der Mastrohling 2 mit seinem hinteren Ende 3 in der Figur auf Grund seiner konischen Form nach unten positioniert eingezeichnet. Die Rollen 25 und 25' der Beaufschlagungselemente 24 bzw. 24' (wobei in der Figur 2 nur die in Durchlaufrichtung vordersten Rollen der Elemente 24, 24' ersichtlich sind) sind entsprechend dem geringen Durchmesser des vorderen Endes 4 des Rohlings 2 aufeinander hin zugestellt und beaufschlagen den Rohling 2 entsprechend seiner konischen Form, indem sie einen Durchlass mit geringem Durchmesser für den Rohling an dieser Stelle bilden. Die in Durchlassrichtung weiter hinten (zum Ende 3 des Rohlings) liegenden Rollen 25, 25' (sowie auch die Rollen 15, 15' der Elemente 14, 14') sind bereits weiter auseinander gefahren worden, um den größeren Umfang des konisch auseinander laufenden Rohlings zu berücksichtigen. Die Stellantriebe für die Bewegung der Rollen 25, 25' bzw. der die Rollen tragenden Elemente 24 und 24' sind durch die Antriebselemente 26 und 27 dargestellt, die Bewegungen in Richtung der Pfeile B ausführen können. Dies erfolgt gesteuert durch die Steuerung bzw. einen Rechner 29. Dieser bewegt die genannten Rollen mit dem Durchlauf des Rohlings durch die Vorrichtung 1 aus ihrer nahe zueinander stehenden Stellung auseinander, um der konischen Form, die in der Steuerung als Sollform gespeichert ist, Rechnung zu tragen. Anfänglich stehen dabei die ersten Rollen 15, 15' beim Einlauf so nahe beieinander, wie die Rollen 25, 25' der Figur 2, um einen dem Zopf 4 angepassten Einlauf zu bilden. Bei dem Durchlauf werden dann diese Rollen 15, 15' und die weiteren Rollen angetrieben durch ihre Antriebe 26, 27 immer weiter auseinander gefahren, um der Durchmesserzunahme des konischen Rohlings Rechnung zu tragen. Durch diese Formgebung für den Rohling während des Durchlaufs wird durch entsprechende Steuerung der Rollen eine zunehmende Spaltschließung bewirkt. Zur besseren Definition der Lage des Rohlings in der Vorrichtung 1 kann ein Schwert, insbesondere ein aus mehreren hintereinander liegenden Rollen 11 gebildetes Schwert 12 (Figur 1), vorgesehen sein. Die Beaufschlagungsmittel 14, 14', 24, 24' und 34, 34' beidseits des Spaltes sind vorzugsweise so angeordnet, dass sie in oder oberhalb der Mittelebene des Rohlings auf diesen einwirken, welche Mittelebene durch die Längsachse L geht und senkrecht auf der Ebene durch den Spalt und die Längsachse steht bzw. bei der dargestellten Lage des Rohlings senkrecht auf der Vertikalebene durch den Spalt steht.

Zusätzlich zu der Beaufschlagung durch die erläuterten Beaufschlagungsmittel beidseits des Spalts 5 sind weitere solche Beaufschlagungsmittel vorgesehen, welche auf der dem Spalt gegenüberliegenden Seite 2' des Rohlings 2 angreifen. In Figur 2 ist dies durch eine der Rollen 44 des Elements 41 der Auflage für den Rohling gegeben. Diese Rollen (sowie die in Durchlaufrichtung vorangehenden Rollen 43 des Elements 40) werden durch Antriebe 50 ebenfalls an die konische Form des Rohlings angepasst bewegt, sodass sie die geneigte Führung gemäß Figur 1 für den Rohling bilden, welche sich an den zunehmenden Durchmesser des Rohlings bei dessen Durchlauf anpasst.

Bevorzugt wird zusätzlich mit diesem Beaufschlagungsmittel, insbesondere mindestens gerade vor und im Schweißbereich, eine Kraft auf den dem Spalt 5 gegenüberliegenden Bereich 2' des Rohlings ausgeübt, welche beim Spalt 5 die beiden Ränder des Rohlings beidseits des Spaltes aufeinander zu drückt, sodass dadurch der Spalt geschlossen wird. Auf diese Weise kann durch die Krafteinwirkung des dem Spalt gegenüberliegenden Beaufschlagungsmittels 41 und allenfalls auch 40 ein für das Laserschweißen geeignetes Spaltmaß erzielt werden. Die Kraft kann von der Steuerung 29 vorgegeben werden und mittels einer Messung, z.B. über eine handelsübliche Kraftmessdose 48 auf den vorgegebenen Wert geregelt werden. Wird eine Spalterkennung, z. B. durch ein optisches Spaltmessgerät 49, vorgesehen, das die Ist-Spaltbreite vor dem Beaufschlagungsmittel 41 misst und an die Steuerung bzw. den Rechner 29 abgibt, kann dieser die Beaufschlagungskraft entsprechend anpassen.

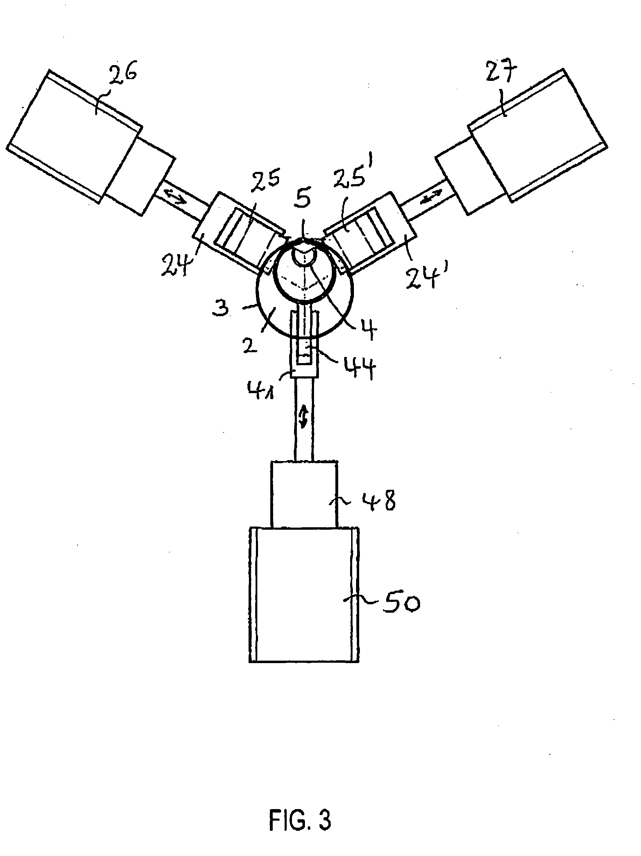

Figur 3 zeigt die Lage der Beaufschlagungsmittel gemäß dem geschilderten Beispiel bei einem weiter fortgeschrittenen Durchlauf des konischen Rohlings. Der Zopf 4 ist bereits geschweißt. Die Beaufschlagungsmittel 24, 24' bzw. 41 sind bereits weiter auseinander gefahren worden, um den größer gewordenen Durchmesser des Rohlings zu berücksichtigen. Es wird weiter die vorbestimmte oder entsprechend einer Messung angepasste Spaltschließkraft durch das untere Beaufschlagungsmittel 41 ausgeübt. Zur Vereinfachung der Figur ist die Steuerung 29 hier nicht mehr dargestellt.

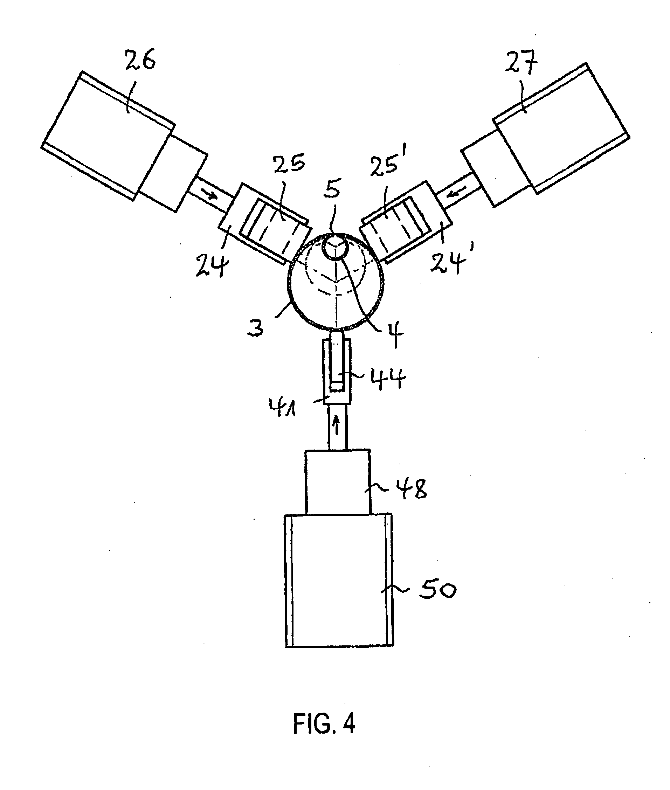

Dies gilt auch für Figur 4, welche die Stellung der Beaufschlagungsmittel zeigt, wenn das Ende 3 mit größtem Durchmesser im Schweißbereich angelangt ist. Entsprechend sind die Rollen 25, 25' und 44 im Schweißbereich jetzt am weitesten auseinander gefahren. Die Elemente 34, 34' und 42 im Auslauf müssen dies noch durchführen, um auch den Auslauf an das größte Ende des durchlaufenden Masts anzupassen. Hingegen können die Elemente 14, 14' und 24 durch ihre Verstellantriebe bereits wieder aufeinander zu gefahren werden, um den Einlauf der Vorrichtung 1 wieder an den Zopfdurchmesser des folgenden Mastrohlings anzupassen. Dies erfolgt auch bei den Beaufschlagungselementen in der Schweißzone, wenn der Rohling von Figur 4 diese verlassen hat und folgt dann für die Elemente 34, 34' und 42 im Auslauf, wenn der Rohling der Figur 4 den Auslauf verlassen hat.

Figur 5 zeigt vom Einlauf der Vorrichtung her gesehen das Schwert 12, 11 sowie die Elemente 14, 14' und 40. Gleiche Bezugszeichen wie bis dahin verwendet bezeichnen dabei gleiche Bauteile. Es ist hier, wie in Figur 1 dargestellt, dass im Schweißbereich zusätzliche Rollen 31 verwendet werden können, welche direkt bei der Schweißstelle auf die Schließung der Naht Einfluss nehmen.

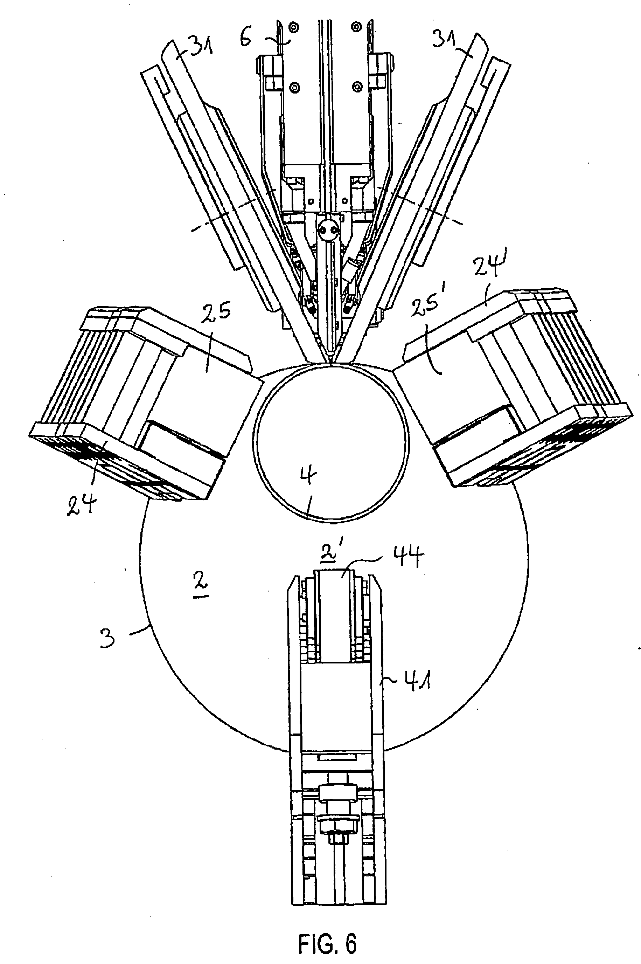

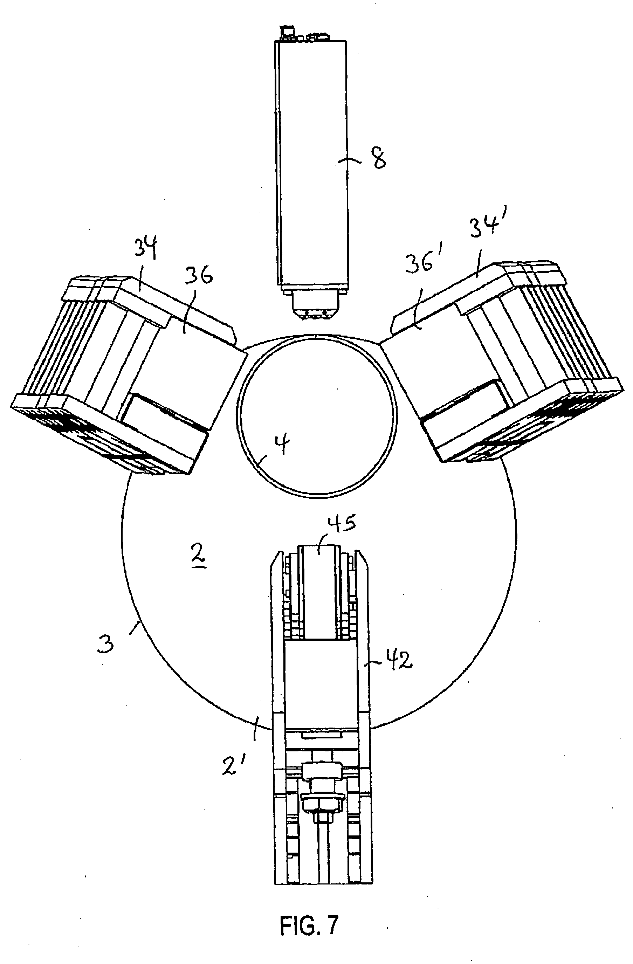

Figur 6 zeigt entsprechend den Schweißbereich vom Auslauf her gesehen mit den verschiedenen Beaufschlagungsmitteln und zusätzlichen Rollen 31. Figur 7 schließlich zeigt die Führungsmittel im Auslauf vom Auslauf her gesehen. Hierbei muss das untere Beaufschlagungsmittel bzw. das Element 45 keine einstellbare Kraft mehr aufbringen, da die Naht bereits verschweißt ist. Weiterhin muss dieses Element aber zur Bildung der verstellbaren Führung verfahren werden. Im Auslaufbereich kann eine Nahtkontrolleinrichtung 8 vorgesehen sein, welche zur Prüfung der Schweißnaht 5' dient.

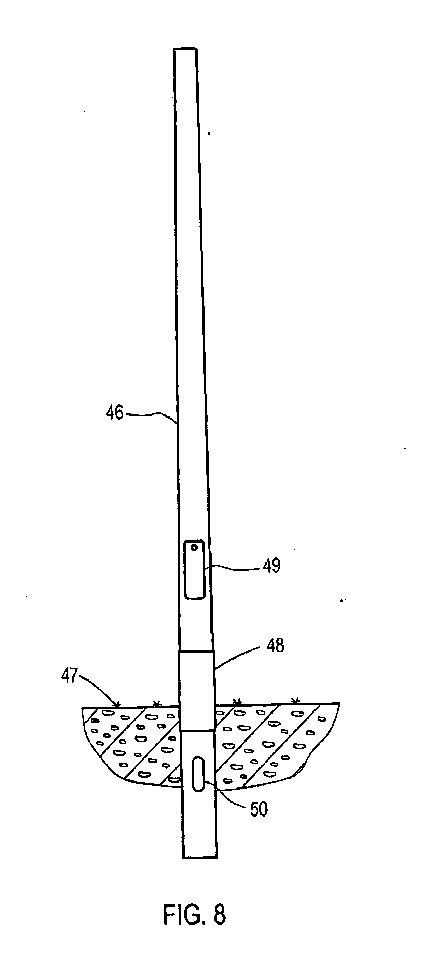

Fig. 8 zeigt eine geschnittene Seitenansicht eines Masts 46, der wie der in den Figuren 1 bis 7 gezeigte Mast hergestellt worden ist. Der aus einem Mastrohling hergestellte Mast 46 weist eine Längsnaht auf, die mittels eines Lasers geschweißt ist. In dem dargestellten Ausführungsbeispiel weist der Mast eine Länge von 10 m und eine Wandstärke von 2 mm auf. Wie in Fig. 8 gezeigt ist, befindet sich im montierten Zustand ein Teil des Masts 46 im Boden 47, in diesem Bereich weist der Mast 46 ein konisches Verstärkungsrohr 48 aus rostfreiem Stahl auf. Das Verstärkungsrohr schützt den Erdübergangsbereich vor Korrosion, gleichzeitig ist durch die erhöhte Wandstärke ein besserer Schutz vor Vandalismus gegeben. Der Ringspalt zwischen dem konischen Verstärkungsrohr 48 und dem Mast 46 ist abgedichtet bzw. mit einer Vergussmasse verfüllt. Der Mast 46 weist Öffnungen 49, 50 auf, wodurch eine Zugänglichkeit zum Inneren des Masts 46 erzielt wird, um z. B. elektrische Leitungen einzuziehen oder anzuschließen. Am oberen Ende des Masts 46 befinden sich in Fig. 8 nicht gezeigte Leuchtmittel. Bei anderen Ausführungen kann sich am Mastfuß eine gewölbte Flanschplatte befinden.

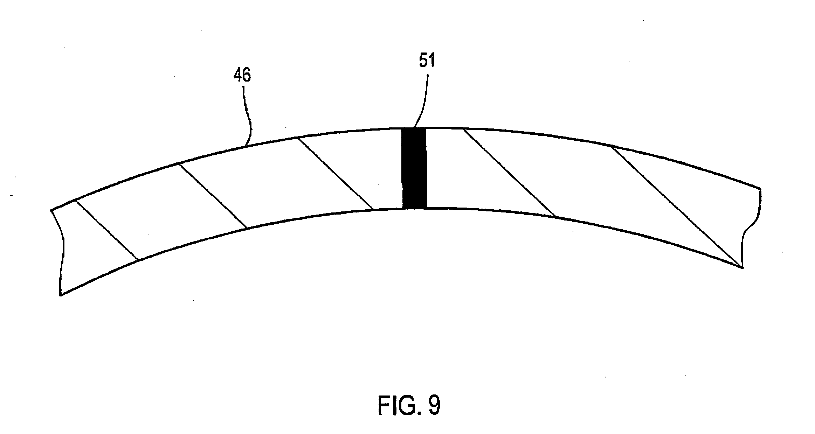

Fig. 9 zeigt einen Schnitt durch den in Fig. 8 gezeigten Mast im Bereich der Schweißnaht. Die Schweißnaht 51 erstreckt sich gemäß der Erfindung über die ganze Wandstärke des Masts 46, sodass die Tragfähigkeit nicht durch die Schweißnaht beeinträchtigt wird.

## Patentansprüche

1. Konischer Mast (46) aus Metall mit einer mittels eines Lasers geschweißten Längsnaht (51) **dadurch gekennzeichnet, dass** die Längsnaht (51) über die gesamte Dicke durchgeschweißt ist und dass der Mast (46) eine Länge bis zu 8 m bei einer Wandstärke von 1,5 mm oder eine Länge zwischen 8 und 12 m bei einer Wandstärke von 2 mm aufweist.

2. Konischer Mast (46) nach Anspruch 1, **dadurch gekennzeichnet, dass** er aus einem rostfreien oder korrosionsbeständigen Stahl hergestellt ist.

3. Konischer Mast (46) nach Anspruch 1, **dadurch gekennzeichnet, dass** er aus Stahl hergestellt und mit einer Korrosionsschutzschicht, insbesondere einer Zinkschicht, versehen ist.

4. Konischer Mast (46) nach einem der vorangehenden Ansprüche, **dadurch gekennzeichnet, dass** am Mastfuß ein konisches Verstärkungsrohr (48) angebracht ist.

5. Konischer Mast (46) nach einem der vorangehenden, **dadurch gekennzeichnet, dass** am Mastfuß eine vorzugsweise gewölbte Flanschplatte angebracht ist.

## Claims

1. Conical mast (46) made of metal having a longitudinal seam (51) welded by means of a laser, **characterized in that** the longitudinal seam (51) is welded through across the entire thickness, and **in that** the mast (46) has a length of up to 8 m in the case of a wall thickness of 1_5 mm or a length of between 8 and 12 m in the case of a wall thickness of 2 mm.

2. Conical mast (46) according to Claim 1, **characterized in that** it is produced from a stainless or corrosion-resistant steel.

3. Conical mast (46) according to Claim 1, **characterized in that** it is produced from steel and is provided with a corrosion protection layer, in particular a zinc layer.

4. Conical mast (46) according to one of the preceding claims, **characterized in that** a conical reinforcing tube (48) is mounted on the mast foot.

5. Conical mast (46) according to one of the preceding claims, **characterized in that** a preferably arcuate flange plate is mounted on the mast foot.

## Revendications

1. Mât conique (46) en métal comprenant un cordon longitudinal (51) de soudure au laser, **caractérisé en ce que** le cordon longitudinal (51) est soudé sur toute son épaisseur et **en ce que** le mât (46) présente une longueur maximale de 8 m pour une épaisseur de paroi de 1,5 mm ou une longueur comprise entre 8 et 12 m pour une épaisseur de paroi de 2 mm.

2. Mât conique (46) selon la revendication 1, **caractérisé en ce qu'**il est fabriqué à partir d'un acier inoxydable ou résistant à la corrosion.

3. Mât conique (46) selon la revendication 1, **caractérisé en ce qu'**il est fabriqué à partir d'acier et est muni d'une couche de protection contre la corrosion, en particulier d'une couche de zinc.

4. Mât conique (46) selon l'une quelconque des revendications précédentes, **caractérisé en ce qu'**un tube de renforcement conique (48) est monté à la base du mât.

5. Mât conique (46) selon l'une quelconque des revendications précédentes, **caractérisé en ce qu'**une plaque formant bride de préférence cintrée est montée à la base du mât.
